# EUROPÄISCHE PATENTANMELDUNG

(11) **EP 3 838 504 A1**
(43) Veröffentlichungstag der Anmeldung: **23.06.2021**
(21) Anmeldenummer: 19218133.7
(22) Anmeldetag: 19.12.2019
(51) Int. Cl.: B25J 9/16

(54) **VERFAHREN UND VORRICHTUNG ZUR ÜBERWACHUNG EINES BEARBEITUNGSPROZESSES UND BEARBEITUNGSMASCHINE MIT EINER SOLCHEN VORRICHTUNG**

(71) Anmelder: FRONIUS INTERNATIONAL GmbH, 4643 Pettenbach (AT)
(72) Erfinder: ENNSBRUNNER, Helmut, 4643 Pettenbach (AT); WITTMANN, Manfred, 4643 Pettenbach (AT)
(74) Vertreter: Sonn & Partner Patentanwälte

(57) **Zusammenfassung**

Die Erfindung betrifft ein Verfahren und eine Vorrichtung (10) zur Überwachung eines Bearbeitungsprozesses, bei dem ein Werkstück (2) mit Hilfe eines auf einem kollaborativen Roboter (1) angeordneten Bearbeitungswerkzeugs (3) während zumindest eines Bearbeitungszeitraums (Δt_{Bi}) entlang zumindest einer Bearbeitungsbahn (x_{Bi}) jeweils kontinuierlich bearbeitbar ist, mit einer Sensoreinrichtung (5) zur Überwachung der Umgebung des kollaborativen Roboters (1) und einer Erkennungsvorrichtung (6) zur Erkennung eines Objekts (4) in einem Manipulationsbereich um jede Bearbeitungsbahn (x_{Bi}) des kollaborativen Roboters (1) sowie eine Bearbeitungsmaschine (18) mit einer solchen Überwachungsvorrichtung (10). Erfindungsgemäß ist die Erkennungsvorrichtung (6) mit einer Vorrichtung (7) zur Ausgabe eines Instruktionssignals (I) innerhalb einer Instruktionsphase (Δt_{I}) im Falle der Erkennung eines Objekts (4) im Manipulationsbereich einer Bearbeitungsbahn (x_{Bi}) des kollaborativen Roboters (1) verbunden.

## Beschreibung

Die Erfindung betrifft ein Verfahren zur Überwachung eines Bearbeitungsprozesses, bei dem ein Werkstück mit Hilfe eines auf einem kollaborativen Roboter angeordneten Bearbeitungswerkzeugs während zumindest eines Bearbeitungszeitraums entlang zumindest einer Bearbeitungsbahn jeweils kontinuierlich bearbeitet wird, wobei die Umgebung des kollaborativen Roboters überwacht wird und ein Objekt in einem Manipulationsbereich um jede Bearbeitungsbahn des kollaborativen Roboters erkannt wird.

Weiters betrifft die Erfindung eine Vorrichtung zur Überwachung eines Bearbeitungsprozesses, bei dem ein Werkstück mit Hilfe eines auf einem kollaborativen Roboter angeordneten Bearbeitungswerkzeugs während zumindest eines Bearbeitungszeitraums entlang zumindest einer Bearbeitungsbahn jeweils kontinuierlich bearbeitbar ist, mit einer Sensoreinrichtung zur Überwachung der Umgebung des kollaborativen Roboters und einer Erkennungsvorrichtung zur Erkennung eines Objekts in einem Manipulationsbereich um jede Bearbeitungsbahn des kollaborativen Roboters.

Schließlich ist die Erfindung auch auf eine Bearbeitungsmaschine, insbesondere eine Schweißvorrichtung, mit einem kollaborativen Roboter zur kontinuierlichen Bearbeitung eines Werkstücks während zumindest eines Bearbeitungszeitraums entlang zumindest einer Bearbeitungsbahn gerichtet.

Als kollaborativer Roboter oder sogenannter Cobot wird ein Industrieroboter bezeichnet, der mit Menschen gemeinsam arbeitet und im Bearbeitungsprozess nicht durch Schutzeinrichtungen von diesen getrennt ist. Die sicherheitstechnischen Anforderungen an die kollaborativen Roboter sind in entsprechenden Normen definiert und sehen vor, dass zum Schutz der Menschen Kollisionen zwischen Roboter und Mensch verhindert werden. Zu diesem Zweck verfügen die Roboter über entsprechende Sensoren, wobei es bei bestimmten Sensorsignalen automatisch zu einer Abschaltung der Roboter kommt. Beispielsweise beschreibt die US 5,952,796 A einen solchen kollaborativen Roboter.

Verfahren zur Planung von Bearbeitungsprozessen, an welchen kollaborative Roboter beteiligt sind, um einerseits maximale Bearbeitungsgeschwindigkeiten erzielen zu können und andererseits das Verletzungsrisiko für beteiligte Personen möglichst gering zu halten, werden im Stand der Technik, beispielsweise in der WO 2015/049207 A2, beschrieben.

Bei Bearbeitungsprozessen, wo die Bewegung des kollaborativen Roboters Teil des Bearbeitungsprozesses ist, sind die vorgeschriebenen Schutzmaßnahmen der kollaborativen Roboter nicht problemlos anwendbar. Die Standardschutzmaßnahme des kollaborativen Roboters ist ein Stoppen der Bewegung, was einer Unterbrechung des Bearbeitungsprozesses gleich kommt, der sich negativ auf die Fertigungsqualität auswirkt. Beispiele für derartige Bearbeitungsprozesse, bei welchen die Bewegung des kollaborativen Roboters Teil des Fertigungsprozesses ist, sind Schweiß- oder Lötverfahren, Lackierverfahren, Klebeverfahren, Oberflächenbehandlungsverfahren, um einige Beispiele zu nennen. Während des Bearbeitungsprozesses kann zusätzlich oder anstelle des kollaborativen Roboters auch das Werkstück entsprechend gesteuert bewegt werden und muss nicht gezwungenermaßen ortsfest sein. Bei einer Bewegung des Werkstücks unterliegt die Einrichtung, welche die Bewegung des Werkstücks bewirkt, denselben Regel wie ein kollaborativer Roboter.

Die vorliegende Erfindung bezieht sich auf derartige Bearbeitungsprozesse, bei welchen über zumindest einen Bearbeitungszeitraum vorbestimmte Bearbeitungsbahnen jeweils kontinuierlich bearbeitet werden sollen und für eine möglichst hohe Bearbeitungsqualität die Bearbeitung dieser Bearbeitungsbahnen während den Bearbeitungszeiträumen nicht unterbrochen werden soll. Als Beispiel eines derartigen Bearbeitungsprozesses wird die Bildung einer oder mehrerer Schweißnähte an einem Werkstück erwähnt. Würde die kontinuierliche Bearbeitung einer Bearbeitungsbahn, beispielsweise die Bildung einer Schweißnaht, durch die automatische Abschaltung des kollaborativen Roboters unterbrochen, müsste die Bearbeitung an der Stelle der Unterbrechung fortgesetzt werden, was zu einem Qualitätsverlust oder sogar zu einem Ausschuss des Werkstücks führen könnte.

Die Aufgabe der vorliegenden Erfindung besteht in der Schaffung eines oben genannten Verfahrens und einer oben genannten Vorrichtung zur Überwachung eines Bearbeitungsprozesses und einer Bearbeitungsmaschine mit einer solchen Überwachungsvorrichtung, durch welche der Bearbeitungsprozess möglichst unterbrechungsfrei abläuft. Nachteile bekannter Verfahren sollen reduziert oder vermieden werden.

Gelöst wird die erfindungsgemäße Aufgabe in verfahrensmäßiger Hinsicht dadurch, dass im Falle der Erkennung eines Objekts im Manipulationsbereich einer Bearbeitungsbahn des kollaborativen Roboters innerhalb einer Instruktionsphase ein Instruktionssignal ausgegeben und der Bearbeitungsprozess fortgesetzt wird. Die vorliegende Erfindung sieht vor, dass rechtzeitig erkannt wird, ob ein Objekt im Manipulationsbereich einer Bearbeitungsbahn des kollaborativen Roboters vorhanden ist, sodass rechtzeitig vor einer automatischen Abschaltung des kollaborativen Roboters Ausnahmen ergriffen werden können, um das Objekt aus dem Manipulationsbereich zu entfernen, das Objekt, sofern es sich um einen Menschen handelt, sich aus dem Manipulationsbereich entfernen kann oder die Bearbeitung entsprechend umzuplanen, sodass das erkannte Objekt kein Hindernis mehr für den kollaborativen Roboter darstellt und somit der Bearbeitungsprozess fortgesetzt werden kann. Unter den Begriff "Objekt" fallen sämtliche Gegenstände oder Personen, mit welchen Teile des kollaborativen Roboters kollidieren könnten. Unter den Begriff "Manipulationsbereich" wird jener Bereich in Bezug auf die Bearbeitungsbahn des kollaborativen Roboters verstanden, innerhalb dessen Kollisionen während des Bearbeitungsprozesses möglich sind. Je nach Art des kollaborativen Roboters kann es sich dabei um einen kleinen Bereich um die Bearbeitungsbahn und auch einen größeren Bereich, der auch die Achsen des Roboters und deren Bewegungsmöglichkeiten berücksichtigt, handeln. Durch die erfindungsgemäße Ausgabe eines Instruktionssignals bei Erkennung eines Objekts im Manipulationsbereich einer Bearbeitungsbahn kann somit erreicht werden, dass das Objekt rechtzeitig aus dem Manipulationsbereich entfernt wird oder die Bearbeitung entsprechend geändert wird, sodass eine Fortsetzung des Bearbeitungsprozesses gewährleistet werden kann. Sollten die Maßnahmen zur Entfernung des Objekts oder Umplanung des Bearbeitungsprozesses scheitern, werden natürlich zur Erfüllung der entsprechenden Normen und zur Verhinderung einer Gefährdung des Personals oder einer Zerstörung der Bearbeitungsmaschinen oder des Werkstücks die üblichen Schutzmaßnahmen, also in der Regel ein Stoppen der Bewegung des Roboters, wie bisher durchgeführt. Eine Änderung oder Umplanung des Bearbeitungsprozesses kann verschiedenartig erfolgen, beispielsweise durch die Bearbeitung der selben Bearbeitungsbahn in deren Manipulationsbereich das Objekt erkannt wurde, mit unterschiedlichen Bewegungen des Roboters oder durch Veränderung der Reihenfolge der Bearbeitung der Bearbeitungsbahnen, sofern der Bearbeitungsprozess mehrere Bearbeitungsbahnen umfasst. Die Erkennung des Objekts im Manipulationsbereich einer Bearbeitungsbahn kann durch unterschiedlichste Sensoren und Einrichtungen erfolgen, welche entweder am kollaborativen Roboter angeordnet sind oder an geeigneten Stellen platziert sind.

Bei der Erkennung eines Objekts im Manipulationsbereich einer Bearbeitungsbahn kann als Instruktionssignal beispielsweise eine Warnung ausgegeben werden. Durch die Warnung werden beteiligte Personen darauf aufmerksam gemacht, dass sich ein Objekt im Manipulationsbereich einer Bearbeitungsbahn befindet, wodurch diese zu einer Entfernung des Objekts oder das Setzen anderer Maßnahmen angeregt werden. Die Warnung wird vorzugsweise in Form einer akustischen, optischen und bzw. oder taktilen Warnung ausgegeben. Die verschiedenen Arten der Warnung können alternativ oder kumulativ erfolgen und vorzugsweise im Bereich des Bearbeitungsprozesses bzw. der Bearbeitungsbahnen ausgegeben werden, sodass entsprechende Maßnahmen zur Entfernung des erkannten Objekts ergriffen werden können. Zusätzlich oder alternativ dazu können aber auch die Warnungen an Stellen, welche vom Bearbeitungsprozess entfernt sind, wie z.B. einer Überwachungszentrale einer Bearbeitungshalle, oder auch zu Dokumentationszwecken übermittelt werden.

Im Falle der Erkennung eines Objekts im Manipulationsbereich einer Bearbeitungsbahn des kollaborativen Roboters kann alternativ oder zusätzlich zur Warnung als Instruktionssignal auch ein entsprechendes Anweisungssignal an den kollaborativen Roboter zur Änderung oder Umplanung des Bearbeitungsprozesses ausgegeben werden. Dadurch wird der kollaborative Roboter automatisch dazu angeregt, eine Umplanung der Bearbeitung vorzunehmen, wenn sich ein Objekt im Manipulationsbereich einer Bearbeitungsbahn befindet. Wie bereits oben kurz erwähnt, kann die Änderung oder Umplanung des Bearbeitungsprozesses verschiedenartig erfolgen.

Im Fall der Bearbeitung mehrerer Bearbeitungsbahnen während des Bearbeitungsprozesses kann die Umplanung durch eine Veränderung der Reihenfolge der Bearbeitungsbahnen realisiert werden. Dadurch kann eine durch ein erkanntes Objekt blockierte Bearbeitungsbahn später bearbeitet werden, in der Hoffnung, dass in der Zwischenzeit das Objekt entfernt wurde bzw. sich aus dem Manipulationsbereich dieser Bearbeitungsbahn entfernt hat. Sofern sich das erkannte Objekt in einem Teil des Manipulationsbereichs befindet, der durch eine entsprechende Umplanung des kollaborativen Roboters umgangen werden kann, stellt dies eine andere Möglichkeit einer Änderung des Bearbeitungsprozesses dar. Beispielsweise kann ein mehrachsiger Roboter die Bearbeitungsbahn von einer geänderten als der ursprünglich geplanten Richtung bearbeiten.

Entsprechend dem ausgegebenen Anweisungssignal im Falle der Erkennung eines Objekts im Manipulationsbereich einer Bearbeitungsbahn des kollaborativen Roboters kann die Bearbeitung des Werkstücks auch mit verringerter Bearbeitungsgeschwindigkeit entlang zumindest einer Bearbeitungsbahn fortgesetzt werden. Diese Option soll lediglich eine mögliche Kollision des Roboters mit dem Objekt verhindern, sofern andere Maßnahmen wie das Ändern oder Umplanen des Bearbeitungsprozesses oder die Entfernung des Objekts aus dem Manipulationsbereich scheitern. Je nach Bearbeitungsprozess kann sich eine Verringerung der Bearbeitungsgeschwindigkeit nämlich auch negativ auf die Fertigungsqualität auswirken.

Das ausgegebene Instruktionssignal kann an die Art des erkannten Objekts angepasst werden. Durch diese Maßnahme kann im ausgegebenen Instruktionssignal eine Information über die Art des erkannten Objekts vermittelt werden. Beispielsweise kann die Lautstärke einer akustischen Warnung oder Lichtstärke einer optischen Warnung oder Intensität einer taktilen Warnung als Instruktionssignal an die Größe eines Objekts angepasst werden. Unter der Voraussetzung entsprechender Erkennungsvorrichtungen, wie z.B. automatischer Bildverarbeitungssysteme, können auch entsprechende die Art des Objekts beschreibende Informationen akustisch oder optisch ausgegeben werden, sodass das entsprechende Bedienungspersonal Informationen darüber erhält, um welches Objekt (beispielsweise ein auf der Bearbeitungsbahn liegendes Werkzeug oder ein in der Nähe der Bearbeitungsbahn befindlicher Mensch) es sich handelt.

Das ausgegebene Instruktionssignal kann weiters an die Position und bzw. oder Lage des erkannten Objekts angepasst werden. Da Position und bzw. oder die Lage des erkannten Objekts Einfluss auf die mögliche Änderung oder Umplanung des Bearbeitungsprozesses hat, ist eine Berücksichtigung im ausgegebenen Anweisungssignal als Instruktionssignal ebenfalls von großer Bedeutung. Befindet sich ein Objekt direkt auf der Bearbeitungsbahn, kann eine Änderung des Bearbeitungsprozesses nur durch vorübergehende Änderung der Reihenfolge der Bearbeitungsbahnen bestehen, wohingegen eine Anordnung eines Objekts in der Nähe der Bearbeitungsbahn durch Änderung des Anstellwinkels des Roboters vorgenommen werden kann, ohne dass die Bearbeitung dieser Bearbeitungsbahn später vorgenommen werden muss. Beispielsweise kann ein Roboter die Bearbeitungsbahn von der gegenüberliegenden Seite bearbeiten, sofern sich ein Personal als Objekt an der anderen Seite der Bearbeitungsbahn befindet.

Unmittelbar vor einer drohenden Kollision des kollaborativen Roboters mit dem erkannten Objekt wird die Bearbeitung des Werkstücks vorzugsweise in kontrollierter Weise gestoppt. Durch diese Maßnahme wird eine Zerstörung der Bearbeitungsmaschine oder Komponenten davon sowie des zu bearbeitenden Werkstücks verhindert und eine spätere Fortsetzung des Bearbeitungsprozesses erleichtert. Beispielsweise kann vor einer drohenden Kollision des Roboters mit dem erkannten Objekt ein Schweißprozess durch geeignete Schweißparameter beendet werden und nicht bloß durch plötzliche Abschaltung der Schweißstromquelle. Dadurch könnte eine Fortsetzung der Schweißung der Schweißnaht ohne oder ohne wesentliche Qualitätseinbußen ermöglicht werden. Bei anderen Bearbeitungsprozessen ist dies ebenfalls denkbar.

Gelöst wird die erfindungsgemäße Aufgabe auch durch eine oben genannte Vorrichtung zur Überwachung eines Bearbeitungsprozesses, bei dem die Erkennungsvorrichtung mit einer Vorrichtung zur Ausgabe eines Instruktionssignals innerhalb einer Instruktionsphase im Falle der Erkennung eines Objekts im Manipulationsbereich einer Bearbeitungsbahn des kollaborativen Roboters verbunden ist. Wie bereits erwähnt, kann die Überwachungsvorrichtung im kollaborativen Roboter integriert sein oder sich auch an einer davon entfernten Stelle bzw. davon entfernten Stellen befinden, von welchen eine optimale Erkennung von Objekten im Manipulationsbereich der Bearbeitungsbahnen möglich ist. Wichtig dabei ist, dass die Erkennung des Objekts im Manipulationsbereich der Bearbeitungsbahn des kollaborativen Roboters entsprechend vorausschauend, also möglichst lange vor einer drohenden Kollision des Roboters mit dem Objekt, erkannt wird. Auch können die Teile der Überwachungsvorrichtung, wie die Sensoreinrichtung, Erkennungsvorrichtung und Vorrichtung zur Ausgabe eines Instruktionssignals, an unterschiedlichen und entsprechend geeigneten Positionen angeordnet werden. Zu den mit der Überwachungsvorrichtung des Bearbeitungsprozesses erzielbaren Vorteilen wird auf die Beschreibung des Verfahrens zur Überwachung des Bearbeitungsprozesses verwiesen.

Die Vorrichtung zur Ausgabe eines Instruktionssignals kann durch eine Warnvorrichtung zur Ausgabe einer Warnung gebildet sein.

Alternativ oder zusätzlich dazu kann die Vorrichtung zur Ausgabe eines Instruktionssignals auch durch eine Vorrichtung zur Ausgabe eines Anweisungssignals an den kollaborativen Roboter zur Umplanung des Bearbeitungsprozesses gebildet sein.

Die Warnvorrichtung kann durch einen Lautsprecher, eine optische Anzeige und bzw. oder eine Vibrationsvorrichtung gebildet sein. Je nach Bearbeitungsprozess können unterschiedliche Arten von Warnungen und Warnvorrichtungen Vorteile aufweisen. Beispielsweise wird bei sehr lauten Bearbeitungsprozessen eine optische oder taktile Warnung Vorteile gegenüber einer akustischen Warnung haben. Die Warnvorrichtung kann an entsprechend geeigneten Positionen platziert werden, beispielsweise auch direkt in einer am Körper eines Bedienungspersonals getragenen Einrichtung, wie z.B. einem Kopfhörer, einem Armband, einem Schweißhelm, einer Datenbrille oder vieles mehr.

Wenn die Erkennungsvorrichtung drahtlos mit der Vorrichtung zur Ausgabe eines Instruktionssignals verbunden ist, kann die Warnung an entfernte Stellen ohne störende Drahtverbindungen übertragen werden.

Gemäß einem weiteren Merkmal der Erfindung ist die Erkennungsvorrichtung mit einer Schnittstelle zur Verbindung mit dem kollaborativen Roboter verbunden. Durch die Verbindung zwischen Überwachungsvorrichtung und kollaborativem Roboter wird eine Änderung und Umplanung des Bearbeitungsprozesses in bestimmten Grenzen ermöglicht, wodurch eine Fortsetzung des Bearbeitungsprozesses gewährleistet werden kann und dadurch die Fertigungsqualität nicht beeinträchtigt werden kann. Als Schnittstellen kommen verschiedenste standardisierte Schnittstellen, wie z.B. CAN Bus Verbindungen oder dgl., in Frage. Die Schnittstellen können zur drahtgebundenen oder drahtlosen Verbindung dienen.

Wenn die Erkennungsvorrichtung mit einer Datenbank verbunden ist, welche Datenbank verschiedene Instruktionssignale in Abhängigkeit der Art und bzw. oder der Position und bzw. oder Lage der erkannten Objekte aufweist, können gezielte Instruktionssignale (Warnungen und bzw. oder Anweisungssignale an den kollaborativen Roboter) ausgegeben werden. Beispielsweise kann für verschiedene Objekte, z.B. bestimmte Werkzeuge oder Personen als Objekte, geeignete Informationen der Datenbank hinterlegt werden, welche bei Erkennung dieser Objekte als Warnung oder Anweisungssignal wiedergegeben werden. Beispielsweise kann akustisch oder optisch die Warnung ausgegeben werden, dass sich eine Zange auf der Bearbeitungsbahn befindet, wodurch das Bedienungspersonal veranlasst werden kann, diese rasch von der Bearbeitungsbahn zu entfernen, sodass der Bearbeitungsprozess ohne Unterbrechung fortgeführt werden kann. Neben Bildverarbeitungsverfahren können auch andere physikalische Verfahren, welche beispielsweise das Material des Objekts ermitteln, zur Anwendung kommen.

Die Sensoreinrichtung kann beispielsweise durch zumindest eine Kamera gebildet sein. Dies stellt eine geeignete Realisierung der Sensoreinrichtung dar. Als Kamera kommen normale Kameras, Hochgeschwindigkeitskameras, Tiefenkameras, welche auch die Position des Objekts im dreidimensionalen Raum feststellen können, infrage. Darüber hinaus kommen auch andere Sensoren, wie z.B. Ultraschallsender und -empfänger, Radarsysteme, LIDAR (Light Detection and Ranging)-Systeme, infrage.

Wenn eine Vorrichtung zur Beseitigung eines erkannten Objekts vorgesehen ist, kann auch eine automatisierte Beseitigung oder ein Beseitigungsversuch erfolgen. Derartige Vorrichtungen können je nach Bearbeitungsprozess und je nach erkanntem Objekt unterschiedlichst ausgestaltet sein, beispielsweise in Form einer Druckluftvorrichtung, welche kleinere Objekte durch Druckluft beseitigen kann, bis hin zu Schiebern, welche die Objekte aus dem Manipulationsbereich schieben, bis hin zu Greifsystemen, welche die Objekte ergreifen und aus dem Manipulationsbereich entfernen.

Gelöst wird die erfindungsgemäße Aufgabe auch durch eine Bearbeitungsmaschine, insbesondere Schweißvorrichtung, mit einem kollaborativen Roboter zur kontinuierlichen Bearbeitung eines Werkstücks während zumindest eines Bearbeitungszeitraums entlang zumindest einer Bearbeitungsbahn, welche eine oben beschriebene Überwachungsvorrichtung aufweist. Durch eine mit einer erfindungsgemäßen Überwachungsvorrichtung ausgestattete Bearbeitungsmaschine kann eine Unterbrechung des Bearbeitungsprozesses durch automatische Abschaltung des kollaborativen Roboters verhindert bzw. dessen Frequenz zumindest reduziert werden und somit die Taktzeit bei der Bearbeitung der Werkstücke erhöht und der Ausschuss durch qualitativ minderwertige Werkstücke reduziert werden. Zu den weiteren Vorteilen wird auf die obige Beschreibung des Überwachungsverfahrens und der Überwachungsvorrichtung verwiesen.

Die vorliegende Erfindung wird anhand der beigefügten Zeichnungen näher erläutert. Darin zeigen:
- Fig. 1: eine Prinzipskizze einer Bearbeitungsmaschine zur Durchführung eines Bearbeitungsprozesses;
- Fig. 2: ein Blockschaltbild einer erfindungsgemäßen Überwachungsvorrichtung zur Überwachung eines Bearbeitungsprozesses;
- Fig. 3: eine Ausführungsform einer Überwachungsvorrichtung zur Überwachung eines Bearbeitungsprozesses;
- Fig. 4: eine weitere Ausführungsform einer in einem Schweißroboter integrierten Überwachungsvorrichtung;
- Fig. 5: einen aus mehreren Bearbeitungsbahnen bestehenden Bearbeitungsprozess, während dem kein Objekt im Manipulationsbereich erkannt wurde;
- Fig. 6: den Bearbeitungsprozess gemäß Fig. 5, wobei im Manipulationsbereich einer Bearbeitungsbahn ein Objekt erkannt wurde und eine entsprechende Warnung als Instruktionssignal ausgegeben wird;
- Fig. 7: eine Variante des Bearbeitungsprozesses gemäß Fig. 6, wobei im Manipulationsbereich einer Bearbeitungsbahn ein Objekt erkannt wurde und entsprechend einem Anweisungssignal als Instruktionssignal eine Umplanung der Bearbeitung stattfindet;
- Fig. 8: eine weitere Variante des Bearbeitungsprozesses gemäß Fig. 6, wobei im Manipulationsbereich einer Bearbeitungsbahn ein Objekt erkannt wurde und entsprechend einem Anweisungssignal als Instruktionssignal der Bearbeitungsprozess umgeplant wird; und
- Fig. 9: eine weitere Variante des Bearbeitungsprozesses gemäß Fig. 6, wobei im Manipulationsbereich einer Bearbeitungsbahn ein Objekt erkannt wurde und entsprechend einem Anweisungssignal als Instruktionssignal die Bearbeitung einer Bearbeitungsbahn mit verringerter Geschwindigkeit fortgesetzt wird.

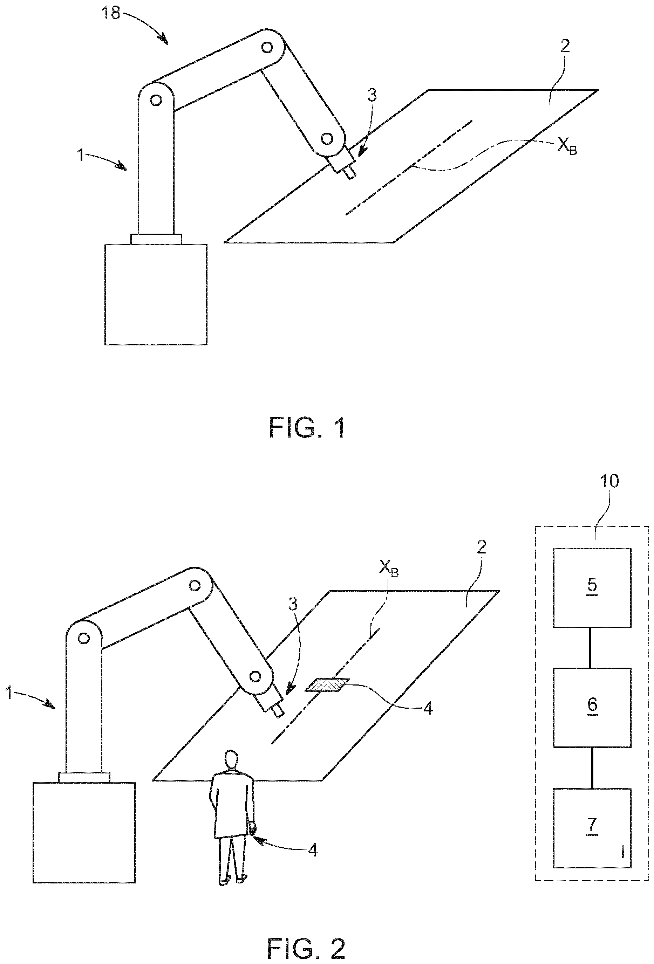

Fig. 1 zeigt eine Prinzipskizze einer Bearbeitungsmaschine 18 zur Durchführung eines Bearbeitungsprozesses, bei dem ein Werkstück 2 mit Hilfe eines auf einem kollaborativen Roboter 1 angeordneten Bearbeitungswerkzeugs 3 während zumindest eines Bearbeitungszeitraums Δt_{Bi} entlang zumindest einer Bearbeitungsbahn x_{Bi} bearbeitet wird. Im einfachsten Fall wird eine Bearbeitungsbahn x_{B} während eines Bearbeitungszeitraums Δt_{B} bearbeitet, beispielsweise eine Schweißnaht entlang einer Bearbeitungsbahn x_{B} hergestellt. Neben derartigen einfachen Bearbeitungsprozessen umfassen übliche Bearbeitungsprozesse die Bearbeitung mehrerer Bearbeitungsbahnen x_{Bi} zu mehreren Bearbeitungszeiträumen Δt_{Bi}, wobei zwischen der Bearbeitung der einzelnen Bearbeitungsbahnen x_{Bi} Pausen eingelegt werden, in welchen der kollaborative Roboter 1 neu positioniert, Werkzeuge gewechselt oder Bearbeitungsparameter geändert werden. Die vorliegende Erfindung bezieht sich auf Bearbeitungsprozesse, bei welchen eine Unterbrechung der Bearbeitung einer Bearbeitungsbahn x_{Bi} zu Veränderungen der Fertigungsqualität führt und unter Umständen sogar das Werkzeug 2 dadurch verworfen werden muss. Als Beispiele solcher Bearbeitungsprozesse werden Schweißverfahren, Lötverfahren, Lackierverfahren, Oberflächenbehandlungsverfahren, beispielsweise mittels Plasmastrahlen, und vieles mehr genannt. Wie bereits oben erwähnt, kann zusätzlich oder alternativ zum kollaborativen Roboter 1 auch das Werkstück 2 mit einer entsprechenden Einrichtung (nicht dargestellt) bewegt werden.

Fig. 2 zeigt ein Blockschaltbild einer erfindungsgemäßen Überwachungsvorrichtung 10 zur Überwachung eines Bearbeitungsprozesses. Die Überwachungsvorrichtung 10 beinhaltet eine Sensoreinrichtung 5 zur Überwachung der Umgebung des kollaborativen Roboters 1 bzw. zumindest des Manipulationsbereichs um die Bearbeitungsbahn x_{B} des kollaborativen Roboters 1. Mit der Sensoreinrichtung 5 verbunden ist eine Erkennungsvorrichtung 6, welche Objekte 4 in einem Manipulationsbereich um jede Bearbeitungsbahn x_{B} des kollaborativen Roboters 1 erkennt. Bei Objekten 4 kann es sich beispielsweise um Gegenstände auf der Bearbeitungsbahn x_{B,} in der Nähe der Bearbeitungsbahn x_{B} oder Personen im Manipulationsbereich handeln. Mit der Erkennungsvorrichtung 6 ist eine Vorrichtung 7 verbunden, welche im Falle der Erkennung eines Objekts 4 im Manipulationsbereich einer Bearbeitungsbahn x_{B} ein Instruktionssignal I ausgibt. Das ausgegebene Instruktionssignal I der Vorrichtung 7 kann eine Warnung W sein, wodurch ein Bedienungspersonal auf die Erkennung eines Objekts 4 hingewiesen werden und innerhalb einer Instruktionsphase Δt_{I} zur Entfernung des Objekts 4 angeregt werden kann. Zusätzlich oder alternativ dazu kann als Instruktionssignal I auch ein Anweisungssignal A an den kollaborativen Roboter 1 ausgegeben werden zur Umplanung des Bearbeitungsprozesses. Das Anweisungssignal A kann verschiedenartig (drahtlos oder drahtgebunden) zum kollaborativen Roboter 1 gelangen, wo beispielsweise anhand von gespeicherten alternativen Bearbeitungsprozessen entschieden werden kann, ob eine Änderung bzw. Umplanung des Bearbeitungsprozesses möglich ist. Sofern es innerhalb dieser Instruktionsphase Δt_{I} nicht gelingt, das Objekt 4 aus dem Manipulationsbereich zu entfernen oder den Bearbeitungsprozess zu ändern oder umzuplanen, treten die üblichen Standardschutzmaßnahmen des kollaborativen Roboters 1 ein und es kommt üblicherweise zu einem Stoppen der Bewegung des Roboters und somit zu einer Beendigung des Bearbeitungsprozesses. Durch das Instruktionssignal I, welche von der Vorrichtung 7 ausgegeben wird, wenn ein Objekt 4 im Manipulationsbereich der Bearbeitungsbahn x_{B} erkannt wird, besteht jedoch die Möglichkeit, Maßnahmen zu ergreifen, um den Bearbeitungsprozess oder zumindest einzelne Bearbeitungsbahnen x_{Bi} kontinuierlich fortsetzen zu können. Dadurch kann die Qualität des Bearbeitungsprozesses und somit des bearbeiteten Werkstücks 2 erhöht und ein Ausschuss vermieden werden.

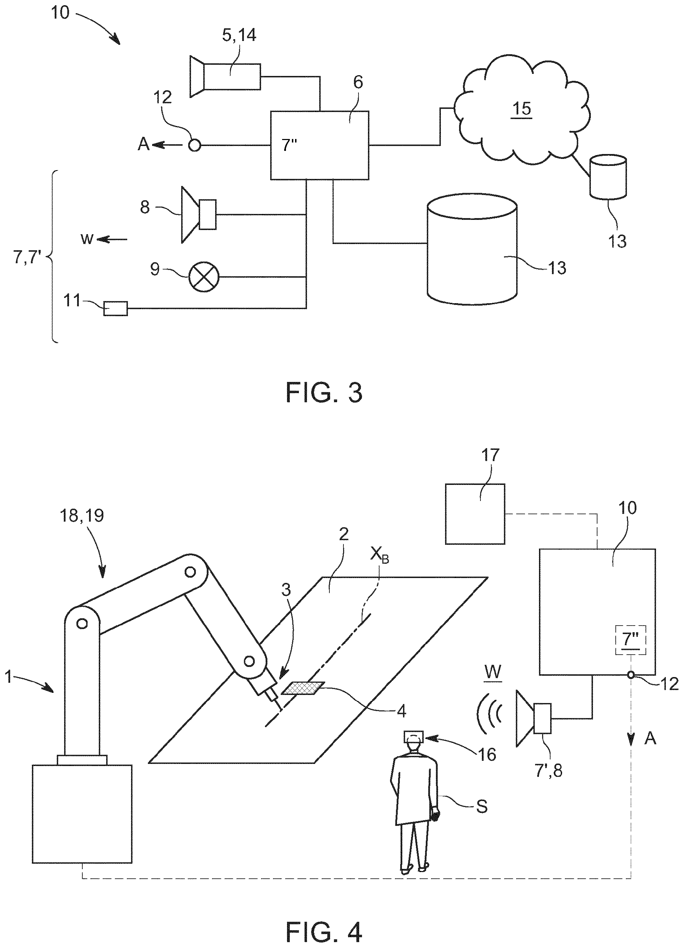

Fig. 3 zeigt eine Ausführungsform einer Überwachungsvorrichtung 10 zur Überwachung eines Bearbeitungsprozesses. Die Überwachungsvorrichtung 10 beinhaltet eine Sensoreinrichtung 5, welche beispielsweise durch eine Kamera 14 gebildet sein kann. Die Sensoreinrichtung 5 ist mit der Erkennungsvorrichtung 6 beispielsweise an einer Bildverarbeitungsvorrichtung zur Verarbeitung der mit der Kamera 14 aufgenommenen Bilder verbunden. Die Vorrichtung 7 zur Ausgabe eines Instruktionssignals I ist hier durch eine Warnvorrichtung 7' zur Ausgabe einer Warnung W gebildet. Als Warnvorrichtung 7' können beispielsweise ein Lautsprecher 8, eine optische Anzeige 9 oder eine Vibrationsvorrichtung 11 vorgesehen sein, welche fakultativ oder kumulativ eingesetzt werden können. Neben direkt angeschlossenen Warnvorrichtungen 7' können verschiedene Warnvorrichtungen 7' auch drahtlos mit der Erkennungsvorrichtung 6 verbunden sein (nicht dargestellt). Die Erkennungsvorrichtung 6 der Überwachungsvorrichtung 10 kann eine Schnittstelle 12 zur Verbindung mit dem kollaborativen Roboter 1 aufweisen, über die ein Anweisungssignal A einer Vorrichtung 7'' an den kollaborativen Roboter 1 (nicht dargestellt) zur Umplanung des Bearbeitungsprozesses ausgegeben werden kann. Weitere Schnittstellen (nicht dargestellt) zur Verbindung mit anderen am Bearbeitungsprozess beteiligten Komponenten sind ebenfalls denkbar.

Mit der Erkennungsvorrichtung 6 kann eine Datenbank 13 verbunden sein, welche verschiedene Warnungen W oder Anweisungssignale A in Abhängigkeit der Art, und bzw. oder der Position und bzw. oder der Lage erkannten Objekte 4 enthält. Dadurch kann in Abhängigkeit der Art, Position oder Lage des erkannten Objekts 4 ein unterschiedliches Instruktionssignal I der Vorrichtung 7 ausgegeben werden. Die Datenbank 13 kann auch über ein Netzwerk 15, insbesondere das Internet, mit der Erkennungsvorrichtung 6 verbunden sein.

Fig. 4 zeigt eine weitere Ausführungsform einer in einem Schweißroboter integrierten Überwachungsvorrichtung 10. In diesem Ausführungsbeispiel ist am kollaborativen Roboter 1 ein Schweißbrenner als Bearbeitungswerkzeug 3 angeordnet bzw. die Schweißvorrichtung 19 im kollaborativen Roboter 1 integriert. Die Überwachungsvorrichtung 10 befindet sich im dargestellten Ausführungsbeispiel von der Schweißvorrichtung 19 entfernt, kann aber auch in dieser integriert sein. Als Teil der Überwachungsvorrichtung 10 oder auch extern ist eine Warnvorrichtung 7' in Form eines Lautsprechers 8 vorgesehen, die bei Erkennung eines Objekts 4 im Manipulationsbereich der Bearbeitungsbahn x_{B} eine Warnung W abgibt. Die Warnung W kann beispielsweise auch in Form einer optischen Warnung W auf das Head-up-Display eines Schweißhelms 16 an einen Schweißer S abgegeben werden. Dadurch wird der Schweißer S dazu angeregt, das Objekt 4 aus dem Manipulationsbereich der Bearbeitungsbahn x_{B} zu entfernen, sodass der Bearbeitungsprozess fortgeführt werden kann. Denkbar ist auch die Verbindung einer Vorrichtung 17 zur Beseitigung eines erkannten Objekts 4 mit der Überwachungsvorrichtung 10, welche Beseitigungsvorrichtung 17 das erkannte Objekt 4 automatisch aus dem Manipulationsbereich des kollaborativen Roboters 1 entfernt. Als weiterer Teil der Überwachungsvorrichtung 10 kann eine Vorrichtung 7'' zur Ausgabe eines Anweisungssignals A an den kollaborativen Roboter 1 als weiteres Instruktionssignal I vorgesehen sein. Über eine Schnittstelle 12 der Überwachungsvorrichtung 10 kann das Anweisungssignal A an den kollaborativen Roboter 1 übertragen werden, um bei Erkennen eines Objekts 4 den Bearbeitungsprozess ändern oder umplanen zu können. Wichtig bei einer Änderung des Bearbeitungsprozesses ist, dass im Falle der Änderung des Zugangs des kollaborativen Roboters 1 in Bezug auf die Bearbeitungsbahn x_{B} der TCP (Tool Center Point) gleich bleibt, sodass eine Bearbeitung der Bearbeitungsbahn x_{B} mit gleicher Qualität gewährleistet werden kann.

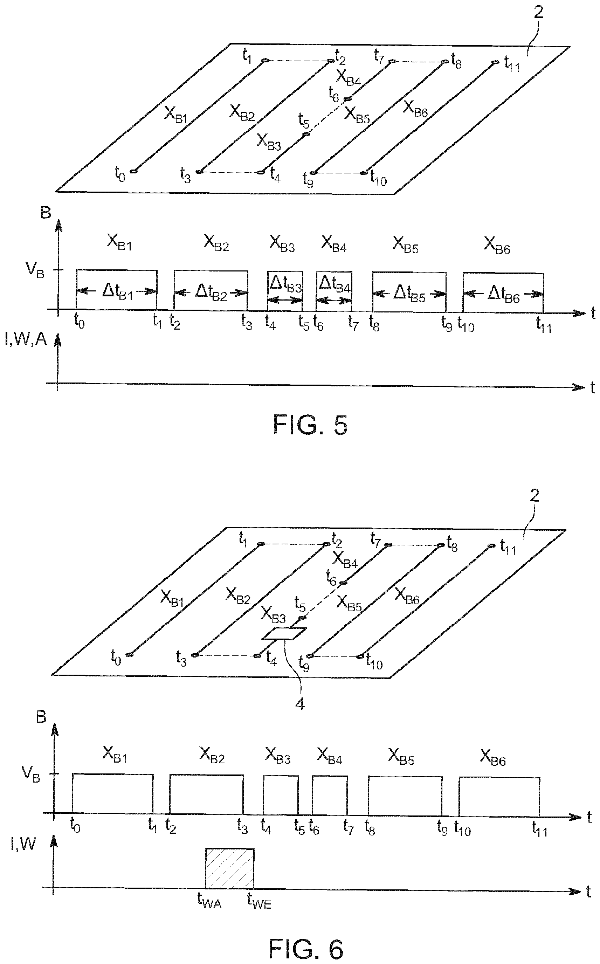

Fig. 5 zeigt einen aus mehreren Bearbeitungsbahnen x_{B1} bis x_{B6} bestehenden Bearbeitungsprozess, während dem kein Objekt 4 im Manipulationsbereich erkannt wurde. Auf dem Werkstück 2 befinden sich sechs Bearbeitungsbahnen x_{B1} bis x_{B6}, welche hintereinander bearbeitet werden. Demgemäß erfolgt die Bearbeitung B beginnend mit Zeitpunkt t₀ mit der Bearbeitung der ersten Bearbeitungsbahn x_{B1}, welche während der Bearbeitungsdauer Δt_{Bi} mit einer Bearbeitungsgeschwindigkeit v_{B} bis zum Zeitpunkt t₁ erfolgt. Nach einer Pause wird mit der Bearbeitung der Bearbeitungsbahn x_{B2} zum Zeitpunkt t₂ begonnen, welcher zum Zeitpunkt t₃ beendet wird. Nach Beendigung der Bearbeitung der Bearbeitungsbahn x_{B6} zum Zeitpunkt t₁₁ ist der Bearbeitungsprozess abgeschlossen. Nachdem sich kein Objekt 4 im Manipulationsbereich einer Bearbeitungsbahn x_{B1} bis x_{B6} befindet, wird auch kein Instruktionssignal I in Form einer Warnung W oder eines Anweisungssignals A während der Bearbeitungsdauer ausgegeben.

Fig. 6 zeigt den Bearbeitungsprozess gemäß Fig. 5, wobei im Manipulationsbereich einer Bearbeitungsbahn, hier der Bearbeitungsbahn x_{B3}, ein Objekt 4 erkannt wurde. Die Bearbeitung B wird mit Bearbeitung der Bearbeitungsbahn x_{B1} begonnen und mit der Bearbeitung der Bearbeitungsbahn x_{B2} fortgesetzt. Rechtzeitig vor der Bearbeitung der Bearbeitungsbahn x_{B3} wird von der Erkennungsvorrichtung 6 ein Objekt 4 in einer Bearbeitungsbahn, hier in der Bearbeitungsbahn x_{B3}, erkannt und rechtzeitig eine Warnung W als Instruktionssignal I ausgegeben. Die Warnung W wird zu einem Zeitpunkt t_{WA} begonnen und so lange ausgegeben, bis das Objekt 4 entfernt wurde. Im dargestellten Ausführungsbeispiel erfolgt das Ende der Warnung W zum Zeitpunkt t_{WE}, worauf der Bearbeitungsprozess mit Bearbeitung der Bearbeitungsbahn x_{B3} fortgesetzt und planmäßig, wie im Fall der Bearbeitung gemäß Fig. 5, beendet werden kann.

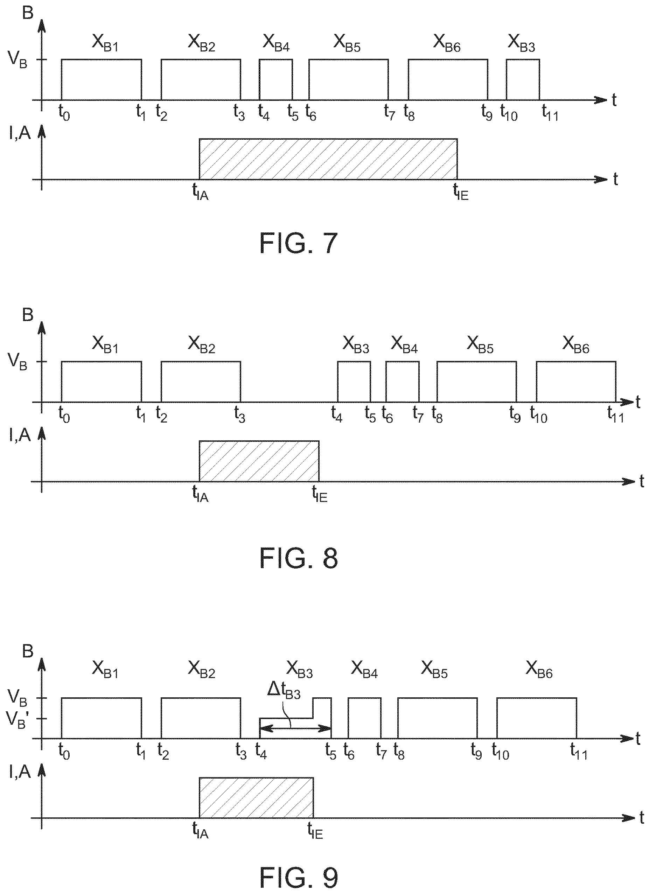

Fig. 7 zeigt eine Variante des Bearbeitungsprozesses gemäß Fig. 6, wobei im Manipulationsbereich der Bearbeitungsbahn x_{B3} ein Objekt 4 erkannt wurde und entsprechend einem Anweisungssignal A als Instruktionssignal I eine Umplanung des Bearbeitungsprozesses stattfindet. In diesem Ausführungsbeispiel findet eine Umplanung der Bearbeitung statt, indem die Reihenfolge der Bearbeitungsbahnen x_{Bi} verändert wird. Im dargestellten Ausführungsbeispiel wird nach der Bearbeitung der Bearbeitungsbahn x_{B2} zum Zeitpunkt t₄ mit der Bearbeitung der Bearbeitungsbahn x_{B4} fortgesetzt, danach die Bearbeitung der Bearbeitungsbahn x_{B5} und die Bearbeitung der Bearbeitungsbahn x_{B6} vorgenommen. Während der Bearbeitung der Bearbeitungsbahn x_{B6} wird das erkannte Objekt 4 zum Zeitpunkt t_{IE} aus dem Manipulationsbereich entfernt wodurch die Ausgabe des Instruktionssignals I bzw. Anweisungssignals A gestoppt wird. Danach wird die Bearbeitung mit der Bearbeitungsbahn x_{B3} in geänderter Reihenfolge abgeschlossen. Solange das Objekt 4 im Manipulationsbereich erkannt wird, erfolgt die Ausgabe des Instruktionssignals I bzw. Anweisungssignals A (zwischen den Zeitpunkten t_{IA} und t_{IE}).

Fig. 8 zeigt eine weitere Variante eines Bearbeitungsprozesses, wobei im Manipulationsbereich der Bearbeitungsbahn x_{B3} ein Objekt 4 erkannt wurde und entsprechend einem Anweisungssignal A an den kollaborativen Roboter 1 eine Umplanung des Bearbeitungsprozesses stattfindet. Im Gegensatz zum Ausführungsbeispiel gemäß Fig. 7 erfolgt hier eine Umplanung des Bearbeitungsprozesses nicht durch Änderung der Reihenfolge der Bearbeitungsbahnen x_{Bi}, sondern durch Verlängerung der Pause zwischen der Bearbeitung der Bearbeitungsbahn x_{B2} und Bearbeitung der Bearbeitungsbahn x_{B3}, bis das Objekt 4 von der Bearbeitungsbahn x_{B3} bzw. dessen Manipulationsbereich erfolgreich entfernt wurde. Im dargestellten Ausführungsbeispiel wird zwischen den Zeitpunkten t_{IA} und t_{IE} ein Objekt 4 im Manipulationsbereich erkannt. Zum Zeitpunkt t_{IE} erfolgt die Entfernung des Objekts 4 von der Bearbeitungsbahn x_{B3} und endet somit die Ausgabe eines Instruktionssignals I bzw. Anweisungssignals A. Danach kann zum Zeitpunkt t₄ die Bearbeitung der Bearbeitungsbahn x_{B3} fortgesetzt und die Bearbeitung planmäßig bis zur Bearbeitung der Bearbeitungsbahn x_{B6} abgeschlossen werden. Bei dieser Variante wird zwar die Bearbeitungsdauer insgesamt erhöht, es kommt jedoch zu keiner Unterbrechung der Bearbeitung der einzelnen Bearbeitungsbahnen x_{Bi} während der Bearbeitungszeiträume Δt_{Bi}, wodurch die Qualität der Bearbeitung nicht negativ beeinflusst wird.

In Fig. 9 ist eine weitere Variante des Bearbeitungsprozesses gemäß Fig. 6 dargestellt, wobei im Manipulationsbereich der Bearbeitungsbahn x_{B3} ein Objekt 4 erkannt wurde und entsprechend einem Anweisungssignal A als Instruktionssignal I die Bearbeitung einer Bearbeitungsbahn mit verringerter Geschwindigkeit fortgesetzt wird. Hier wird nach Erkennung eines Objekts 4 die momentan laufende Bearbeitung, hier die Bearbeitung der Bearbeitungsbahn x_{B2}, abgeschlossen und danach die Bearbeitung der Bearbeitungsbahn x_{B3}, in dessen Bereich das Objekt 4 erkannt wurde, mit verringerter Geschwindigkeit v_{B}' gegenüber der normalen Bearbeitungsgeschwindigkeit v_{B} durchgeführt, wodurch der Bearbeitungszeitraum Δt_{B3} der Bearbeitung der Bearbeitungsbahn x_{B3} verlängert wird und somit mehr Zeit geschaffen wird, um das Objekt 4 von der Bearbeitungsbahn x_{B3} zu entfernen oder die Bewegung des kollaborativen Roboters 1 zu ändern. Wenn zum Zeitpunkt t_{IE} das Objekt 4 nicht mehr erkannt wird, kann die Bearbeitung des Werkstücks 2 mit Bearbeitung der Bearbeitungsbahn x_{B3} mit normaler Bearbeitungsgeschwindigkeit v_{B} beendet und mit der Bearbeitung der weiteren Bearbeitungsbahnen x_{B4} und x_{B5} fortgesetzt und schließlich mit der Bearbeitung der Bearbeitungsbahn x_{B6} abgeschlossen werden. Auch bei dieser Variante des Bearbeitungsverfahrens wird die Gesamtdauer der Bearbeitung gegenüber der Variante gemäß Fig. 5 erhöht und dennoch gewährleistet, dass die Bearbeitungen der einzelnen Bearbeitungsbahnen x_{Bi} ohne Unterbrechung kontinuierlich während der Bearbeitungszeiträume Δt_{Bi} vorgenommen werden können.

Die vorliegende Erfindung gewährleistet eine Durchführung eines Bearbeitungsprozesses mit ununterbrochener Bearbeitung der Bearbeitungsbahn bzw. Bearbeitungsbahnen, ohne dass die Qualität des bearbeiteten Werkstücks 2 beeinträchtigt wird.

## Patentansprüche

1. Verfahren zur Überwachung eines Bearbeitungsprozesses, bei dem ein Werkstück (2) mit Hilfe eines auf einem kollaborativen Roboter (1) angeordneten Bearbeitungswerkzeugs (3) während zumindest eines Bearbeitungszeitraums (Δt_{Bi}) entlang zumindest einer Bearbeitungsbahn (x_{Bi}) jeweils kontinuierlich bearbeitet wird, wobei die Umgebung des kollaborativen Roboters (1) überwacht wird und ein Objekt (4) in einem Manipulationsbereich um jede Bearbeitungsbahn (x_{Bi}) des kollaborativen Roboters (1) erkannt wird, **dadurch gekennzeichnet, dass** im Falle der Erkennung eines Objekts (4) im Manipulationsbereich einer Bearbeitungsbahn (x_{Bi}) des kollaborativen Roboters (1) innerhalb einer Instruktionsphase (Δt_{I}) ein Instruktionssignal (I) ausgegeben und der Bearbeitungsprozess fortgesetzt wird.

2. Verfahren nach Anspruch 1, **dadurch gekennzeichnet, dass** als Instruktionssignal (I) eine Warnung (W), vorzugsweise in Form einer akustischen, optischen und bzw. oder taktilen Warnung (W), ausgegeben wird.

3. Verfahren nach Anspruch 1 oder 2, **dadurch gekennzeichnet, dass** als Instruktionssignal (I) ein Anweisungssignal (A) an den kollaborativen Roboter (1) zur Umplanung des Bearbeitungsprozesses ausgegeben wird.

4. Verfahren nach Anspruch 3, **dadurch gekennzeichnet, dass** entsprechend dem ausgegebenen Anweisungssignal (A) im Falle der Erkennung eines Objekts (4) im Manipulationsbereich einer Bearbeitungsbahn (x_{Bi}) des kollaborativen Roboters (1) der Bearbeitungsprozess geändert wird, indem vorzugsweise die Reihenfolge der Bearbeitungsbahnen (x_{Bi}) verändert wird.

5. Verfahren nach Anspruch 3 oder 4, **dadurch gekennzeichnet, dass** entsprechend dem ausgegebenen Anweisungssignal (A) im Falle der Erkennung eines Objekts (4) im Manipulationsbereich einer Bearbeitungsbahn (x_{Bi}) des kollaborativen Roboters (1) die Bearbeitung des Werkstücks (2) mit verringerter Bearbeitungsgeschwindigkeit (v_{B}') entlang zumindest einer Bearbeitungsbahn (x_{Bi}) fortgesetzt wird.

6. Verfahren nach einem der Ansprüche 1 bis 5, **dadurch gekennzeichnet, dass** das ausgegebene Instruktionssignal (I) an die Art und bzw. oder an die Position und bzw. oder Lage des erkannten Objekts (4) angepasst wird.

7. Verfahren nach einem der Ansprüche 1 bis 6, **dadurch gekennzeichnet, dass** unmittelbar vor einer drohenden Kollision des kollaborativen Roboters (1) mit dem erkannten Objekt (4) die Bearbeitung des Werkstücks (2) in kontrollierter Weise gestoppt wird.

8. Vorrichtung (10) zur Überwachung eines Bearbeitungsprozesses, bei dem ein Werkstück (2) mit Hilfe eines auf einem kollaborativen Roboter (1) angeordneten Bearbeitungswerkzeugs (3) während zumindest eines Bearbeitungszeitraums (Δt_{Bi}) entlang zumindest einer Bearbeitungsbahn (x_{Bi}) jeweils kontinuierlich bearbeitbar ist, mit einer Sensoreinrichtung (5) zur Überwachung der Umgebung des kollaborativen Roboters (1) und einer Erkennungsvorrichtung (6) zur Erkennung eines Objekts (4) in einem Manipulationsbereich um jede Bearbeitungsbahn (x_{Bi}) des kollaborativen Roboters (1), **dadurch gekennzeichnet, dass** die Erkennungsvorrichtung (6) mit einer Vorrichtung (7) zur Ausgabe eines Instruktionssignals (I) innerhalb einer Instruktionsphase (Δt_{I}) im Falle der Erkennung eines Objekts (4) im Manipulationsbereich einer Bearbeitungsbahn (x_{Bi}) des kollaborativen Roboters (1) verbunden ist.

9. Vorrichtung (10) nach Anspruch 8, **dadurch gekennzeichnet, dass** die Vorrichtung (7) zur Ausgabe eines Instruktionssignals (I) durch eine Warnvorrichtung (7') zur Ausgabe einer Warnung (W) gebildet ist.

10. Vorrichtung (10) nach Anspruch 8 oder 9, **dadurch gekennzeichnet, dass** die Vorrichtung (7) zur Ausgabe eines Instruktionssignals (I) durch eine Vorrichtung (7'') zur Ausgabe eines Anweisungssignals (A) an den kollaborativen Roboter (1) zur Umplanung des Bearbeitungsprozesses gebildet ist.

11. Vorrichtung (10) nach Anspruch 9 oder 10, **dadurch gekennzeichnet, dass** die Warnvorrichtung (7') durch einen Lautsprecher (8), eine optische Anzeige (9) und bzw. oder eine Vibrationsvorrichtung (11) gebildet ist.

12. Vorrichtung (10) nach einem der Ansprüche 8 bis 11, **dadurch gekennzeichnet, dass** die Erkennungsvorrichtung (6) drahtlos mit der Vorrichtung (7) zur Ausgabe eines Instruktionssignals (I) verbunden ist.

13. Vorrichtung (10) nach einem der Ansprüche 8 bis 12, **dadurch gekennzeichnet, dass** die Erkennungsvorrichtung (6) mit einer Schnittstelle (12) zur Verbindung mit dem kollaborativen Roboter (1) verbunden ist.

14. Vorrichtung (10) nach einem der Ansprüche 8 bis 13, **dadurch gekennzeichnet, dass** die Erkennungsvorrichtung (6) mit einer Datenbank (13) verbunden ist, welche Datenbank (13) verschiedene Instruktionssignale (I) in Abhängigkeit der Art und bzw. oder der Position und bzw. oder Lage der erkannten Objekte (4) aufweist.

15. Bearbeitungsmaschine (18), insbesondere Schweißvorrichtung (19), mit einem kollaborativen Roboter (1), zur kontinuierlichen Bearbeitung eines Werkstücks (2) während zumindest eines Bearbeitungszeitraums (At_{B}) entlang zumindest einer Bearbeitungsbahn (x_{B}), **dadurch gekennzeichnet, dass** eine Überwachungsvorrichtung (10) nach einem der Ansprüche 8 bis 14 vorgesehen ist.
